Europäisches Patentamt

European Patent Office

Office européen des brevets

(11) Publication number: **0 431 555 B1**

## EUROPEAN PATENT SPECIFICATION

(45) Date of publication of patent specification: **06.04.94**  (51) Int. Cl.[5]: **C09K 5/06**

(21) Application number: **90123212.4**

(22) Date of filing: **04.12.90**

(54) **Phase change material for cold use.**

(30) Priority: **04.12.89 JP 313422/89**

(43) Date of publication of application:
**12.06.91 Bulletin 91/24**

(45) Publication of the grant of the patent:
**06.04.94 Bulletin 94/14**

(84) Designated Contracting States:
**DE FR IT**

(56) References cited:
**EP-A- 0 290 666**
**DE-A- 2 436 511**
**FR-A- 2 620 723**
**US-A- 4 476 687**

(73) Proprietor: **MITSUBISHI PETROCHEMICAL EN-GINEERING CO., LTD.**
**5-4, Nihonbashi**
**Bakuro-cho 1-chome**
**Chuo-ku Tokyo(JP)**

Proprietor: **JAPAN ETHANOL COMPANY LIMITED**
**25-5, Toranomon 1-chome,**
**Minato-ku**
**Tokyo(JP)**

Proprietor: **TOKYO GAS CO., LTD.**
**5-20, Kaigan 1-chome**
**Minato-ku Tokyo 105(JP)**

(72) Inventor: **Koizumi, Yaunori, c/o Yokkaichi Factory**
**Japan Ethanol Co. Ltd.,**
**3-71, Obata 3-chome**
**Yokkaichi-shi, Mie-ken(JP)**
Inventor: **Oka, Masahiro, c/o Yokkaichi Division, Mitsubishi**
**Petrochemical Eng. Co., Ltd.,**
**1000, Kawajiri-cho**
**Yokkaichi-shi, Mie-ken(JP)**
Inventor: **Hashimito, Ryoichi**
**5-6-104, Susukino 2-chome,**
**Midori-ku**
**Yokohama-shi, Kanagawa-ken(JP)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a phase change material for cold use, and more specifically to a phase change material for cold use for storing an energy of low temperatures and utilizing it efficiently and stably.

Liquefied natural gas (to be sometimes referred to as LNG) is a source of a clean and non-pollutional energy. It is converted to natural gas and used as city gas or an industrial fuel.

Since LNG is a low temperature liquid at ordinary pressures having a temperature of -156°C, it is expected to effectively utilize its waste cold generated when LNG is converted into a natural gas. However, since the amount of LNG varies over days and months, it becomes difficult to secure and utilize its waste cold efficiently and stably. At present, therefore, this waste cold is discharged into a large amount of sea water.

EP-A-0 290 666 discloses a deep-freezing solution which contains 35-100% by weight of ethanol and up to 65% by weight of water. The solution may further include an additive such as 1-2% by weight of glycerol. The solution is used to deep freeze food and is provided at a temperature of down to -60°C, but no cooler.

DE-A-2 436 511 discloses a coolant composition which comprises inter alia ethanol and distilled water which can be used on the human body for refreshening purposes.

US-A-4 476 687 discloses a solution for rapidly cooling heated surfaces which includes water and one or more non-ionic surfactants.

It is an object of this invention to provide a phase change material for storing a cold, which enables such a waste cold as mentioned above to be effectively utilized.

It is another object of the invention to provide a phase change material of high reliability which enables a cold to be used in a required amount whenever required.

Still another object of this invention is to provide a phase change material for cold use convenient for transportation and transfer, which enables a cold to be supplied to a required site whenever necessary.

A further object of this invention is to provide a phase change material for cold use which can give a cold of extremely low temperatures that can supersede liquid nitrogen.

A further object of this invention is to provide a phase change material which by storing a cold, is coagulated or crystallized to a solid, but which in the course of storing the cold, does not form or has difficulty forming, a monolithick block of solid, but which forms a flowable solid in the form of a sherbet.

A further object of this invention is to provide a phase change material for cold use with which heat transfer is easy in any step of storing and releasing a cold.

Further objects and advantages of this invention will become apparent from the following description.

According to this invention, the above objects and advantages are achieved by the use of a phase change material for heat transfer at a temperature of -80°C or below, the phase change material being in the form of a flowable solid and comprising:

(a) a phase change component consisting of a mixture of water and at least 80% by weight ethanol, and
(b) a dispersing agent for the phase change component.

Coagulated according to the present invention, ethanol or a mixture of water and at least 80 % by weight of ethanol is used as a phase change material component which solidifies and stores a cold.

Since these phase change material components have a coagulation point of not more than -80°C, it is advantageous for storing a cold which is derived, for example, from a cold at -156°C attributed to LNG. This is further advantageous because it is a low molecular weight compound, and the amount of this compound per unit weight to be stored cold, namely the amount of fusion heat of the coagulated material, is large. Furthermore, these phase change materials are stable substances and are liquids at room temperatures. Hence, they are easy to handle, and are highly stable to the living body.

The mixture of ethanol and water contains at least 80 % by weight of ethanol. If the content of ethanol is smaller than this or the water content is higher, theoretically the amount of material to be kept cold per unit weight increases. But the coagulating temperature becomes higher, and for example, exceeds -80°C. Hence, it is undesirable.

The phase change material of this invention may contain, in addition to a phase change material component, a component which when the phase change material is coagulated, becomes a dispersing agent for the phase change material. By including such a dispersing agent, the phase change material of this invention has an increased ability to form a sherbet-like flowable solid with an easy heat transfer in any stage of storing and releasing a cold.

Advantageously used as the dispersing agent is a compound or a surface-active agent, which is soluble in a liquid ethanol and does not coagulate, or has difficulty of coagulating, at the coagulating point of ethanol.

2

Examples of preferred compounds which do not coagulate or have difficulty of coagulating include, for example, ethylene glycol, propylene glycol, diethylene glycol, Cellosolves, glycerol, N-methyl pyrrolidone, tetrahydrofuran and dioxane.

Examples of the surface-active agents are non-ionic, cationic or anionic polysiloxanes [such as alcohol-modified products of dimethyl siloxane (for example, OH% 1.8), amine-modified products (for example, amine equivalent 3500, amino % 0.5) of dimethylsiloxane, or carboxyl-modified products (for example, carboxyl equivalent 3,500, carboxyl % 1.2) of dimethylsiloxane]; nonionic, cationic, anionic or amphoteric perfluoroalkyl compounds; nonionic polyoxyethylene-polyoxypropylene block copolymer; nonionic ethylene oxide adducts of acetylene alcohol; nonionic, cationic, anionic or amphoteric alkyl compounds (such as alkyl ethylene oxide adducts, ethylene oxide esters, polysaccharide esters, alkyl amines, alkyl sulfate esters, fatty acid esters, and alkylbetaines; and nonionic ethylene oxide adducts of alkylphenol and anionic alkylaryl compounds. Preferred surface-active agents include nonionic surface-active agents such as sorbitan monoalkylates, polyoxyethylene-polyoxypropylene block copolymer, dimethylpolysiloxane-polyoxyethylene copolymer, dimethylpolysiloxane polyoxypropylene copolymer, ethylene oxide adduct of nonylphenol, and a perfluoroalkylpolyoxyethylene copolymer.

The dispersing agent is used in an amount of preferably 0.1 to 5 parts by weight, more preferably 0.2 to 3 parts by weight, per 100 parts by weight of the phase change material component (a).

The phase change material of this invention including the dispersasnt is desirable because the phase change material is in the form of small coagulated crystals, and show flowability at a low viscosity.

Advantageously, the phase change material of this invention is advantageous for cooling to a temperature of -80°C or below, and particularly, it can be used to cool to -100°C or below.

The phase change material of this invention can be enclosed into a package of a suitable size, can be used as such in a place which requires cooling. When it attains an elevated temperature by using, it can again be cooled to a lower temperature and used.

The phase change material of this invention can be used in various fields. For example, it may be used for cooling blood during transportation or for cooling or maintaining the cooling temperature if the electric power supply is accidentally turned off.

The following Examples specifically illustrate the phase change material of this invention specifically.

In the accompanying drawings,

Figure 1 is a rough view of an experimental apparatus used in Examples; and

Figure 2 shows the development of the experiment in Example 11.

Examples 1 to 24

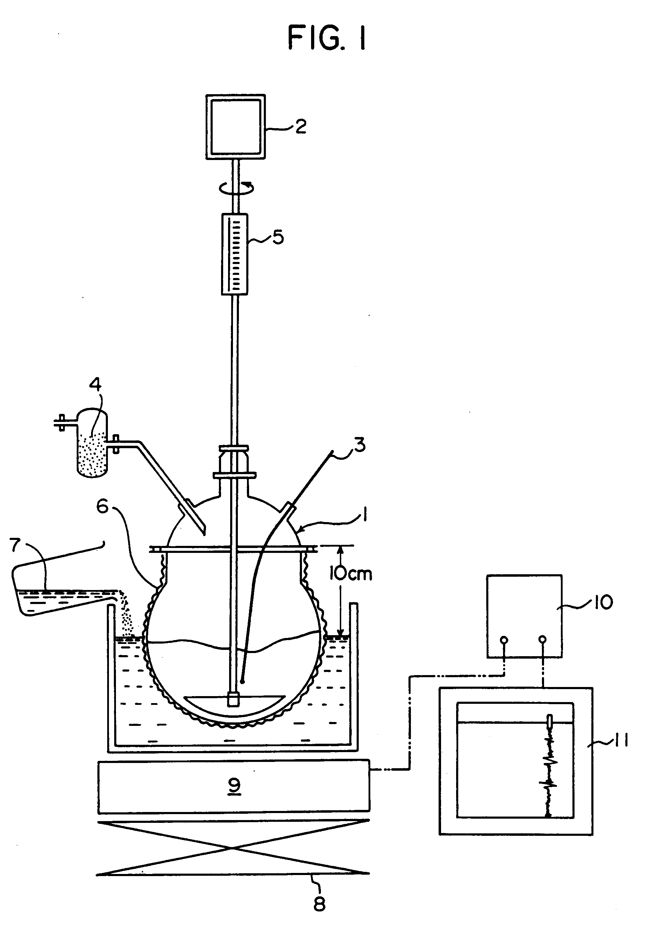

(1) An experiment was carried out by using the experimental device shown in Figure 1.

In a 500 ml separable flask 1, a stirrer 2, a thermometer (thermocouple) 3 and a desiccant 4 (calcium chloride) were set as shown. A torque meter 5 (0 to 10 kg, cm) was set at the stirrer. The outside of the bottom flask of the separable flask 1 was covered with a film 6 (adiabatic material) to prevent abrupt conduction of heat between the contents of the flask and an outer cooling medium (liquid nitrogen) 7. To immerse the lower part of the separable flask 1 easily in an out of the cooling medium bath, the cooling medium bath is mounted on a stretching and contracting stand 8 via an automatic balance 9. The automatic balance 9 is for continuously measuring the amount of the cooling medium continuously, and was connected to a D/A converter 10 and an automatic equilibrium recorder 11.

(2) Throughout the experiment, 250 g of a phase change material was used. The phase change material (250 g) was put into the separable flask 1, and the lower part of the flask was immersed in the cooling medium bath containing liquid nitrogen 7. The liquid nitrogen 7 was continuously replenished during the run so that at a position about 10 cm from the liquid surface of the liquid nitrogen from the separable part of the flask, the liquid nitrogen showed nearly a constant weight. The stirrer 2 was rotated at a rate of 300 rpm, and the amount of the liquid nitrogen which was consumed from the time when the torque could be measured by the torque meter 5 until the rotation of the stirrer 2 failed (stopped) was measured, and made a measure of the amount of the cold created. Furthermore, the size of the crystalline particles of the solidified product was observed, and was made an index of the flowability of the phase change material.

The type and composition of the phase change material component and the type and amount used of the dispersing agent in each run were shown in Table 1.

Table 1

| Example | Phase change material and composition (weight ratio) | Dispersant and amount (wt. %) | Amount cooled [amount of liquid nitrogen consumed (g)] | Size of the crystals |
|---------|---------|---------|---------|---------|
| 1 | Ethanol alone | none | 260 | large |
| 2 | " | Silicone A*1 3 | 330 | medium |
| 3 | " | Silicone B*2 3 | 320 | medium |
| 4 | " | Fluorine A*2 0.2 | 350 | small to medium |
| 5 | Ethanol/water = 9/1 | Pluronic A*4 0.2 | 650 | small |
| 6 | " | Pluronic A 3 | 800 | small |
| 7 | " | Pluronic B*5 3 | 730 | small |
| 8 | " | Sorbitan monooleate 3 | 720 | small |
| 9 | " | Silicone A 0.5 | 650 | small |
| 10 | Ethanol/water = 9/1 | Silicon *6 3 | 650 | small |
| 11 | " | Fluorine B*7 0.5 | 650 | small |
| 12 | " | none | 420 | small |
| 13 | " | Silicon A 0.05 | 450 | small |
| 14 | " | " 0.1 | 550 | small |
| 15 | " | " 1 | 680 | small |
| 16 | " | " 3 | 680 | small |
| 17 | " | " 5 | 700 | small |

– to be continued –

4

Table 1 (continued)

| Example | Phase change material and composition (weight ratio) | Dispersant and amount (wt. %) | Amount cooled [amount of liquid nitrogen consumed (g)] | Size of the crystals |
|---|---|---|---|---|
| 18 | " | " 7 | 650 | small |
| 19 | " | " 10 | 500 | small |
| 20 | Ethanol/water = 95/5 | none | 300 | medium |
| 21 | Ethanol/water = 85/15 | none | 390 | small |
| 22 | Ethanol/water = 80/20 | none | 350 | small |
| 23 | Ethanol/water = 75/25 | none | 300 | medium |
| 24 | Ethanol/water = 70/30 | none | 280 | large |

Note to Table 1

        *1 Silicone A:    Amine-modified dimethyl poly-siloxane (Toray Silicone SF 8417)

        *2 Silicone B:    Alcohol-modified dimethyl polysiloxane (Toray Silicone SF 8427)

        *3 Fluorine A:    Fluorinated alkyl ester (Sumitomo 3M, Fluorad FC0430)

        *4 Pluronic A:    Polyethylene glycol-polypropylene glycol block copolymer (molecular weight 1500; polyethylene glycol moiety 20 % by weight, Daiichi Kogyosha, Epan 420)

        *5 Pluronic B:    Ditto (molecular weight 8000, polyethylene glycol moiety 85 % by weight, Daiichi Kogyosha Epan 435)

        *6 Silicone C:    Polyether-modified dimethyl-polysiloxane (Toray Silicone 3749)

        *7 Fluorine B:    Potassium perfluoroalkyl-carboxylate (Sumitomo 3M, Fluorad FC129)

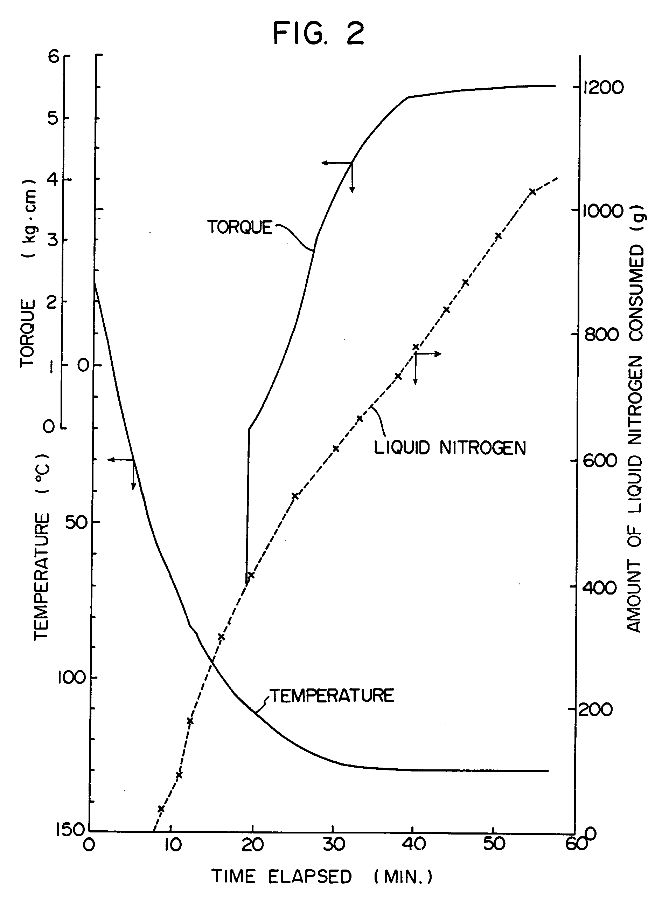

Figure 2 shows the variations in torque (kg.cm) and the variations in temperature (°C) and the amount (g) consumed of liquid nitrogen as against the elapsed time (minutes on the axis of abscissas) for the composition of Example 11 of Table 1. After the lapse of 19 minutes, the torque began. Until the torque became nearly constant about 5.5 after 57 minutes, the amount consumed of liquid nitrogen was 650 g.

**Claims**

1. The use of a phase change material for heat transfer at a temperature of -80 °C or below, the phase change material being in the form of a flowable solid and comprising:
   (a) a phase change component consisting of a mixture of water and at least 80% by weight ethanol, and
   (b) a dispersing agent for the phase change component.

2. The use according to claim 1 wherein the dispersing agent (b) is soluble in liquid ethanol, and does not coagulate, or has difficulty in coagulating at the coagulation point of ethanol.

3. The use according to claim 2 wherein the dispersing agent (b) is ethylene glycol, propylene glycol, diethylene glycol, a Cellosolve, glycerin, N-methylpyrrolidone, tetrahydrofuran, or dioxane.

4. The use according to claim 1 wherein the dispersing agent (b) is a surface-active agent.

5. The use according to claim 4 wherein the dispersing agent (b) is a nonionic, cationic or anionic polysiloxane; a nonionic, cationic, anionic or amphoteric perfluoroalkyl compound; a nonionic polyoxyethylene-polyoxypropylene block copolymer; a nonionic ethylene oxide adduct of acetylene alcohol; a non-ionic, cationic, anionic or amphoteric alkyl compound;, a nonionic ethylene oxide adduct of an alkylphenol; or an anionic alkyl aryl compound.

6. The use according to claim 1 wherein the amount of the dispersing agent (b) is 0.1 to 5 parts by weight per 100 parts by weight of the phase change component (a).

7. The use according to claim 1 wherein the phase change material has a temperature of not more than -100°C.

8. The use of a phase change material for heat transfer at a temperature of -80°C or below comprising:
    (a) a phase change component consisting of a mixture of water and at least 80% by weight ethanol, and
    (b) a surface active agent as a dispersing agent for the phase change component selected from a nonionic, cationic or anionic polysiloxane; a nonionic, cationic, anionic or amphoteric perfluoroalkyl compound; a nonionic polyoxyethylenepolyoxypropylene block copolymer; a nonionic ethylene oxide adduct of acetylene alcohol; a non-ionic, cationic, anionic or amphoteric alkyl compound; a nonionic ethylene oxide adduct of an alkylphenol; or an anionic alkyl aryl compound.

**Patentansprüche**

1. Verwendung eines Phasenwechselmaterials für Hitzeübertragung bei einer Temperatur von - 80°C oder darunter, wobei das Phasenwechselmaterial in Form eines fließfähigen Festkörpers vorliegt und umfaßt:
    (a) eine Phasenwechselkomponente, bestehend aus einer Mischung von Wasser und wenigstens 80 Gew% Ethanol, und
    (b) ein Dispergiermittel für die Phasenwechselkomponente.

2. Verwendung nach Anspruch 1, dadurch gekennzeichnet, daß das Dispergiermittel (b) in flüssigem Ethanol löslich ist und nicht koaguliert, oder Schwierigkeiten hat, am Koagulationspunkt von Ethanol zu koagulieren.

3. Verwendung nach Anspruch 2, dadurch gekennzeichnet, daß das Dispergiermittel (b) Ethylenglykol, Propylenglykol, Diethylenglykol, Cellosolve, Glycerin, N-methylpyrrolidon, Tetrahydrofuran, oder Dioxan ist.

4. Verwendung nach Anspruch 1, dadurch gekennzeichnet, daß das Dispergiermittel (b) ein oberflächenaktives Mittel ist.

5. Verwendung nach Anspruch 4, dadurch gekennzeichnet, daß das Dispergiermittel (b) ein nicht-ionisches, kationisches oder anionisches Polysiloxan; eine nicht-ionische, kationische, anionische oder amphotere Perfluoralkylverbindung; ein nicht-ionisches Polyoxyethylen-Polyoxypropylen-Blockcopolymer; ein nicht-ionisches Ethylenoxid-Additionsprodukt von Acetylenalkohol; eine nicht-ionische, kationische, anionische oder amphotere Alkylverbindung; ein nicht-ionisches Ethylenoxid-Additionsprodukt eines Alkylphenols; oder eine anionische Alkylarylverbindung ist.

6. Verwendung nach Anspruch 1, dadurch gekennzeichnet, daß die Menge an Dispergiermittel (b) 0,1 bis 5 Gewichtsteile auf 100 Gewichtsteile der Phasenwechselkomponente (a) ist.

7. Verwendung nach Anspruch 1, dadurch gekennzeichnet, daß das Phasenwechselmaterial eine Temperatur von nicht mehr als - 100°C hat.

8. Verwendung eines Phasenwechselmaterials für Hitzeübertragung bei einer Temperatur von - 80°C oder darunter, welches umfaßt:

(a) eine Phasenwechselkomponente, bestehend aus einer Mischung von Wasser und wenigstens 80 Gew% Ethanol, und

(b) einem oberflächenaktiven Mittel als ein Dispergiermittel für die Phasenwechselkomponente, welches gewählt ist aus der Gruppe von einem nicht-ionischen, kationischen oder anionischen Polysiloxan; einer nicht-ionischen, kationischen, anionischen oder amphoteren Perfluoralkylverbindung; einem nicht-ionischen Polyoxyethylen-Polyoxypropylen-Blockcopolymer; einem nicht-ionischen Ethylenoxid-Additionsprodukt von Acetylenalkohol; einer nicht-ionischen, kationischen, anionischen oder amphoteren Alkylverbindung; einem nicht-ionischen Ethylenoxid-Additionsprodukt eines Alkylphenols; oder einer anionischen Alkylarylverbindung.

**Revendications**

1. Utilisation d'un matériau à changement de phase pour un transfert thermique à une température de -80°C ou en-dessous, le matériau à changement de phase se présentant sous la forme d'un solide apte à s'écouler et comprenant :

   (a) un composant à changement de phase constitué d'un mélange d'eau et d'au moins 80 % en poids d'éthanol, et

   (b) un agent dispersant destiné au composant à changement de phase.

2. Utilisation selon la revendication 1, dans laquelle l'agent dispersant (b) est soluble dans l'éthanol liquide et ne coagule pas ou présente une difficulté à coaguler au point de coagulation de l'éthanol.

3. Utilisation selon la revendication 2, dans laquelle l'agent dispersant (b) est l'éthylène glycol, le propylène glycol, le diéthylène glycol, un cellosolve, la glycérine, le N-méthylpyrrolidone, le tétrahydrofurane ou le dioxane.

4. Utilisation selon la revendication 1, dans laquelle l'agent dispersant (b) est un agent tensio-actif.

5. Utilisation selon la revendication 4, dans laquelle l'agent dispersant (b) est un polysiloxane non ionique, cationique ou anionique, un composé perfluoroalkyle non ionique, cationique, anionique ou amphotère ; un copolymère en bloc de polyoxypropylène et polyoxyéthylène non ionique ; un adduit non ionique d'oxyde d'éthylène et d'alcool acétylénique ; un composé alkyle non ionique, cationique, anionique ou amphotère ; un adduit non ionique d'oxyde d'éthylène et d'un alkylphénol, ou un composé alkylaryle anionique.

6. Utilisation selon la revendication 1, dans laquelle la quantité d'agent dispersant (b) est comprise entre 0,1 et 5 parties en poids pour 100 parties en poids du composant à changement de phase (a).

7. Utilisation selon la revendication 1, dans laquelle le matériau à changement de phase présente une température ne dépassant pas -100°C.

8. Utilisation d'un matériau à changement de phase pour un transfert thermique à une température de -80°C ou en-dessous, comprenant :

   (a) un composant à changement de phase constitué d'un mélange d'eau et d'au moins 80 % en poids d'éthanol, et

   (b) un agent tensio-actif comme agent dispersant destiné au composant à changement de phase choisi dans le groupe constitué d'un polysiloxane non ionique, cationique ou anionique, d'un composé perfluoroalkyle non ionique, cationique, anionique ou amphotère, d'un copolymère en bloc de polyoxypropylène et de polyoxyéthylène non ionique, d'un adduit non ionique d'oxyde d'éthylène et d'alcool acétylénique, d'un composé alkyle non ionique, cationique, anionique ou amphotère, d'un adduit non ionique d'oxyde d'éthylène et d'un alkylphénol ou d'un composé alkylaryle anionique.

# FIG. 1

# FIG. 2